# EUROPÄISCHE PATENTSCHRIFT

(11) **EP 0 517 096 B1**
(45) Veröffentlichungstag und Bekanntmachung des Hinweises auf die Patenterteilung: **27.03.1996**
(21) Anmeldenummer: 92108957.9
(22) Anmeldetag: 27.05.1992
(51) Int. Cl.: G05D 16/02, F16K 47/00

(54) **Druckminderer mit Dämpfungselement**
Pressure reducing valve incorporating a damping element
Vanne de détente avec élément amortisseur

(30) Priorität: 07.06.1991 DE 9107023 U
(43) Veröffentlichungstag der Anmeldung: 09.12.1992
(73) Patentinhaber: DruVa-Armaturen GmbH, D-69214 Eppelheim (DE)
(72) Erfinder: Bauer, Horst, W-6945 Hirschberg (DE)
(74) Vertreter: Kehl, Günther, Dipl.-Phys.

(56) Entgegenhaltungen:
- EP-A- 0 089 402
- EP-A- 0 286 947
- DE-B- 2 510 235
- FR-A- 2 220 166
- FR-A- 2 560 662
- US-A- 4 190 076
- SOVIET INVENTIONS ILLUSTRATED Section EI, Week E07, 31. März 1982 Derwent Publications Ltd., London, GB; Class T, AN B8002
- PATENT ABSTRACTS OF JAPAN vol. 7, no. 137 (M-222)15. Juni 1983 & JP-A-58050377 (MATSUSHITA DEMKI SANGYO KK) 24.März 1983

## Beschreibung

Die Erfindung betrifft einen Druckminderer mit einem einen Hockdruckeinlaß und einen Niederdruckauslaß aufweisenden Gehäusegrundkörper, in dem ein Ventil angeordnet ist, das den Innenraum des Gehäusesgrundkörpers in einen Niederdruckraum und in einen Hochdruckraum unterteilt, mit einer im Niederdruckraum angeordneten mit dem Ventil in Verbindung stehenden Membran, die von einer Seite mit einer Druckfeder belastet ist und mit einem die Bewegung des Ventils dämpfenden Dämpfungselement.

Bei Druckminderern wird die Niederdruckmembran durch den im Niederdruckraum herrschenden Druck bewegt und dadurch wird das Ventil betätigt. Falls der Druck im Niederdruckraum abfällt, bewegt sich die Niederdruckmembran in einer solchen Richtung, daß das Ventil (weiter) geöffnet wird, während ein Ansteigen des Druckes im Niederdruckraum zu einer Bewegung des Ventiles in Schließrichtung führt. Auf diese Weise wird ein Regelkreis gebildet, der dafür sorgt, daß im Niederdruckraum und folglich auch am Niederdruckanschluß des Druckminderers ein möglichst konstanter Druck herrscht. Die Größe dieses Ausgangsdruckes (Sollwert) wird üblicherweise durch Einstellen der auf die Niederdruckmembran wirkenden Druckfeder festgelegt. Es hat sich gezeigt, daß bei einem solchen Regelsystem Schwankungen entstehen können, die sich soweit aufschaukeln, daß das Ventil des Druckminderers Schaden nimmt.

Aus der FR-A-2 220 166 ist ein Druckminderer der eingangs genannten Art bekannt, bei dem ein aus einem Elastomer bestehendes ringförmiges Dämpfungselement vorgesehen ist. Das ringförmige Dämpfungselement ist im Niederdruckraum des Druckminderers zwischen einer mit der Membran verbundenen Scheibe und einer mit dem Ventil verbundenen Schale angeordnet. Mit seinem Außenmantel liegt das Dämpfungselement an der Wandung einer Bohrung an, so daß es bei axialer Bewegung an dieser Wandung reibt. Wenn bei dem bekannten Druckminderer der Druck im Niederdruckraum abfällt und sich folglich die Membran in Richtung auf das Ventil bewegt, um dieses (weiter) zu öffnen, wird das Dämpfungselement zwischen der Scheibe und der Schale eingepreßt und wölbt sich in Radialrichtung aus, so daß die Reibung zwischen ihrem Außenmantel und der Wandung der Bohrung vergrößert wird. In der umgekehrten Regelphase, d.h., wenn der Druck im Niederdruckraum ansteigt und sich infolgedessen die Membran in Richtung weg von dem Ventil bewegt, findet eine derartige Auswölbung nicht statt, so daß das Ventil unter relativ geringer Reibung geschlossen wird. Insbesondere dann, wenn bei einem solchen bekannten Druckminderer chemisch aggressive Gase verarbeitet werden sollen, beeinflussen diese das Reibungsverhalten zwischen dem elastischen Dämpfungselement und der Wandung der Bohrung. Dies kann vorallem dazu führen, daß das elastische Dämpfungselement an der Wandung mehr oder weniger fest anklebt und es einer großen Regelabweichung bedarf, um das Regelspiel wieder in Gang zu setzen. Die Regelgenauigkeit des bekannten Druckminderers läßt daher vorallem bei der Verarbeitung von chemisch aggressiven Gasen, jedoch nicht nur bei diesen, zu wünschen übrig.

Aus der FR-A-2 560 662 ist ein thermostatisches Entspannungsventil bekannt, das mit einer Schwingungsdämpfung ausgestattet ist. Das thermostatische Ventil ist vorwiegend für Kältemaschinen bestimmt. Um zu verhindern, daß das Ventil durch Druckpulsationen des Kompressors der Kältemaschine in Schwingung gerät, ist ein Dämpfungselement an dem Betätigungsstößel des Ventils vorgesehen. Das Dämpfungselement besteht aus Metall und weist eine Vielzahl von Fingern auf, die elastisch gegen die bei Betätigung des Ventils sich bewegenden Teile in senkrechter Richtung zur Betätigungsbewegung drücken. Durch die dabei entstehende Reibung werden Schwingungen des Betätigungsorgans gedämpft. Ein Druckminderer geht aus der FR-A-2 560 662 nicht hervor.

Der Erfindung liegt die Aufgabe zugrunde einen Druckminderer der eingangs genannten Art zu schaffen, bei dem das Aufschaukeln von Regelschwankungen möglichst vermieden ist, bei dem jedoch andererseits eine hohe Genauigkeit der Regelung des ausgangsseitigen Druckes beibehalten wird.

Diese Aufgabe ist dadurch gelöst, daß das zur Membran weisende Ende der Druckfeder von einem axial beweglichen Federtopf umgeben ist, der sich mit seiner äußeren Bodenfläche an der Membran abstützt, und daß das Dämpfungselement Metallzungen aufweist, die unter elastischer Vorspannung an der Mantelfläche des Federtopfes anliegen.

Das erfindungsgemäß vorgesehene Dämpfungselement, das Metallzungen aufweist, die unter elastischer Vorspannung an der Mantelfläche des Federtopfes anliegen, reibt bei Bewegung des Federtopfes an diesem, wodurch erreicht wird, daß Regelschwankungen (Schwankungen des Sollwertes oder des Istwertes) nicht zu einer zu starken und plötzlichen Reaktion der Niederdruckmembran führen können. Gleichwohl wurde festgestellt, daß eine noch ausreichend rasche und insbesondere präzise Regelreaktion stattfinden kann. Es wurde gefunden, daß der bei solchen Reibungsdämpfungselementen häufig auftretende "Slip-Stick-Effekt" weitgehend vermieden wird. Vielmehr hat es sich gezeigt, daß sich trotz des Einflusses des Dämpfungselementes eine kontinuierliche ruckfreie Bewegung des Federtopfes und folglich der Niederdruckmembran einstellt. Untersuchungen haben ergeben, daß die Bewegung des durch das Dämpfungselement gebremsten Federtopfes auch bereits bei kleinsten Druckänderungen auf der Niederdruckseite einsetzt. Es kommt folglich nicht zu einem "Festkleben" des Federtopfes, wie dies bei Reibungsdämpfung nach dem Stand der Technik zu befürchten ist.

Nach einer besonders vorteilhaften Ausführungsform weist das Dämpfungselement eine zur Bodenfläche des Topfes etwa parallel liegende, die Mantelfläche des Federtopfes umgebende Ringscheibe auf, die eine Vielzahl von nach innen weisenden Federzungen trägt, die an der Mantelfläche des Federtopfes anliegen und dadurch elastisch in eine Richtung etwa senkrecht zur Fläche der Ringscheibe aufgebogen sind. Hierdurch kann die auf den Federtopf ausgeübte Reibungskraft auf den gesamten Umfang des Federtopfes verteilt werden. Die Anlagekraft der Federzungen und die dadurch hervorgerufene Reibung kann bei dieser Ausführungsform besonders konstant gehalten werden. Zur Befestigung des Dämpfungselements in dem Druckminderer kann die Ringscheibe beispielsweise mittels eines Einspannflansches gegen eine geeignete Auflage gepreßt werden, sodaß das Dämpfungselement ortsfest und in seiner Form stabil festgehalten wird.

Nach einer weiteren vorteilhaften Ausführungsform ist vorgesehen, daß das Dämpfungselement im unbelasteten Zustand, also getrennt von dem Federtopf, in einer solchen Form vorgefertigt ist, daß die Federzungen zur Ringscheibe einen Winkel von 60° bis 85°, vorzugsweise 75° einnehmen. Wenn dann bei der Montage des Druckminderers das Dämpfungselement in Kontakt mit dem Federtopf gebracht wird, werden die Federzungen stärker aufgebogen, sodaß sich ein Winkel zwischen den Federzungen und der Ringscheibe von bis etwas weniger als 90° ergibt. Bei einer solchen Bauweise stellen sich besonders günstige Reibwerte ein.

Wenn die Federzungen nach einer weiteren vorteilhaften Ausführungsform zu ihrem freien Ende hin noch etwas aufgebogen sind, wird vermieden, daß die Federzungen mit ihren Endkanten an dem Federtopf anliegen und dort Riefen verursachen. Durch die Bauweise wird sichergestellt, daß die flachen Teile der Federzunge mit dem Federtopf in Berührung kommen, wodurch sich darüber hinaus eine gleichmäßige Reibkraft ergibt.

Eine Kupfer- Beryllium- Legierung als Grundmaterial für das Dämpfungselement hat sich sowohl hinsichtlich der elastischen Eigenschaften als auch der Reibeigenschaften als besonders günstig gezeigt.

Vorzugsweise besteht das Dämpfungselement aus einem gestanzten Blech mit einer Dicke von 0,1 bis 0,2, vorzugsweise 0,15 mm. Besonders günstige Reibungsverhältnisse stellen sich ein, wenn der Federtopf aus Aluminium gefertigt ist.

Die Erfindung wird im folgenden an Hand eines in den Figuren schematisch dargestellten Ausführungsbeispieles näher erläutert. Es zeigen:
- Figur 1:: Einen Druckminderer gemäß der Erfindung im Längsschnitt;
- Figur 2:: Eine Detaildarstellung aus Figur 1 im vergrößertem Maßstab, teilweise im "Halbschnitt";
- Figur 3:: Ein bei dem Druckminderer vorgesehenes Dämpfungselement in der Draufsicht;
- Figur 4:: Das in Figur 3 gezeigte Dämpfungselement in der Seitenansicht;
- Figur 5:: Eine Detailvergrößerung aus Figur 4;

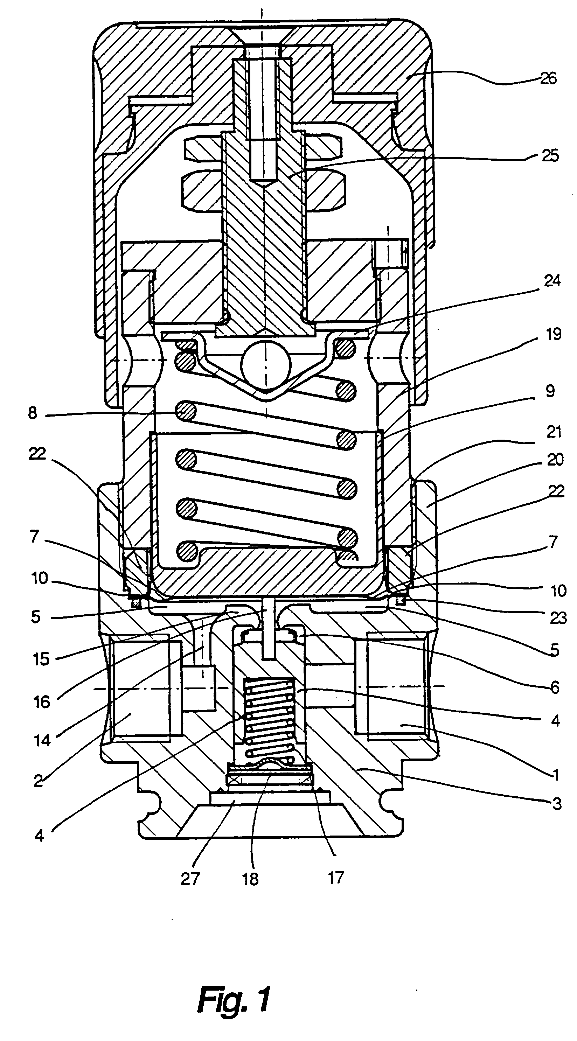

Der in Figur 1 im Überblick dargestellte Druckminderer weist einen Gehäusegrundkörper 3 auf, der mit zwei Anschlußbohrungen, nämlich einem Hochdruckeinlaß 1 und einem Niederdruckauslaß 2 versehen ist. Der Gehäusegrundkörper 3 enthält eine zentrale Längsbohrung, die einen Hochdruckraum 6 bildet und in der ein Ventil 4 sitzt. In den Hochdruckraum 6 mündet eine Bohrung (in der gewählten Schnittdarstellung nicht zu erkennen), die den Hochdruckeinlaß 1 mit dem Hochdruckraum 6 verbindet. Eine Axialbohrung 14 stellt den Verbindungskanal zwischen dem Niederdruckauslaß 2 und einem Niederdruckraum 5 dar, der die Form einer flachen Dose aufweist. Der das Ventil 4 enthaltende Hochdruckraum weist eine Schulter auf, die als Ventilsitz 15 für das Ventil 4 ausgebildet ist.

Der Ventilkörper 4 ist im Querschnitt sechseckig und ist mit einem Betätigungsstößel 16 verbunden, dessen Durchmesser kleiner als die Lichte Weite der Bohrung des Ventilsitzes 15 ist. Der Betätigungsstößel 16 ragt durch die Ventilsitzbohrung hindurch. An der dem Betätigungsstößel 16 gegenüberliegenden Seite des Ventilkörpers 4, ist eine Schließfeder 17 angeordnet, die sich auf einer Lagerplatte 18 abstützt, die gleichzeitig den Hochdruckraum 6 nach außen dicht abschließt. Zur Befestigung eines Gehäuseoberteiles 19 auf dem Gehäusegrundkörper 3 ist der Gehäusegrundkörper mit einem Anschlußflansch 20 ausgerüstet, der ein Innengewinde 21 trägt. Das Gehäuseoberteil weist ein entsprechendes Außengewinde auf und ist in den Anschlußflansch 20 einschraubbar. Der Niederdruckraum 5 ist zur Seite des Gehäuseoberteiles hin durch eine Membran 7 abgeschlossen. Die Membran 7 wird randseitig zwischen einer Schulter des Gehäusegrundkörpers und einem Einspannflansch 22 festgeklemmt. Durch eine umlaufende Dichtung 23 in der Anlageschulter wird ein dichter Sitz der Membran 7 auf der Auflageschulter des Gehäusegrundkörpers gewährleistet. Der Einspannflansch 22 wird durch den axialen Druck des in den Anschlußflansch 20 eingeschraubten Gehäuseoberteiles gegen den Randbereich der Membran 7 gepreßt.

Im zentralen Teil des rohrförmigen Gehäuseoberteiles ist eine Druckfeder 8 angeordnet. Die Druckfeder 8 stützt sich an einem Federteller 24 ab, der mittels einer Gewindespindel 25 durch Drehen an einem Handrad 26 axial verschiebbar ist. Das andere Ende der Druckfeder 8 ist von einem zylinderförmigen, an einem Ende offenen Federtopf 9 umgeben, der in Grenzen axial verschiebbar ist und auf der Membran 7 lastet. Zwischen dem Einspannflansch 22 und der den Einspannflansch 22 tragenden Schulter des Gehäusegrundkörpers 3 ist ein an dem Federtopf 9 reibendes Dämpfungselement 10 angeordnet, das weiter unten im Detail beschrieben wird.

Der Druckminderer gemäß Figur 1 arbeitet wie folgt. Hochdruckgas strömt über den Hochdruckeinlaß 1 und die in der Schnittdarstellung nicht zu erkennende, an den Hochdruckeinlaß 1 anschließende Bohrung in den Hochdruckraum 6, der den Ventilkörper 4 enthält. Von dort strömt das Hochdruckgas - bei geöffnetem Ventilkörper - über die Bohrung des Ventilsitzes 15 in den die Membran 7 enthaltenden Niederdruckraum 5 und von dort über die Axialbohrung 14 zum Niederdruckauslaß 2. Wenn der Druck am Niederdruckauslaß 2 über einen gewissen Wert ansteigt, steigt auch der Druck in dem die Membran 7 enthaltenden Niederdruckraum, bis schließlich die Membran 7 gegen die Kraft der Druckfeder 8 angehoben wird. Infolge der auf den Ventilkörper durch die Schließfeder 17 ausgeübten Kraft, folgt der Ventilkörper 4 dieser Bewegung bis er mit seiner Anschlagschulter den Ventilsitz 15 erreicht und die Zufuhr von weiterem Gas in den Niederdruckraum unterbindet. Somit wird das weitere Ansteigen des ausgangsseitigen Gasdruckes verhindert. Wenn der ausgangsseitige Gasdruck abfällt, beispielsweise weil Gas durch einen Verbraucher entnommen wird, senkt sich die Membran 7 in Richtung auf den Betätigungsstößel 16 und hebt den Ventilkörper 4 von dem Ventilsitz 15 ab, sodaß weiteres Hochdruckgas auf dem oben beschriebenen Weg nachströmen kann. Die gleiche Wirkung tritt ein, wenn durch Drehen an dem Handrad 26 die auf die Membran 7 ausgeübte Kraft der Druckfeder 8 verringert wird. Durch die Einstellung der auf die Membran 7 ausgeübten Federkraft kann somit der Sollwert des Ausgangsdruckes vorgegeben werden.

Das weiter unten im Detail zu beschreibende Dämpfungselement 10 übt eine Reibkraft auf den Federtopf 9 aus, wenn dieser sich in Axialrichtung (zu Regelzwecken) bewegt. Dadurch wird verhindert, daß sich Regelschwankungen aufschaukeln können.

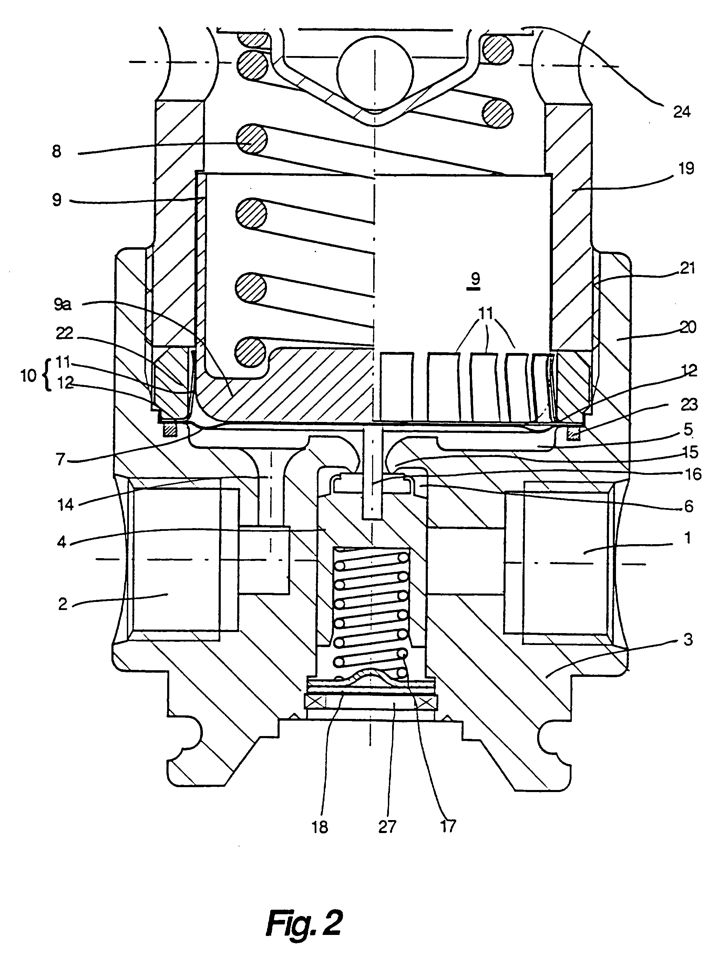

In Figur 2 ist der Bereich des Druckminderers, der den Federtopf 9 und das dort angeordnete Dämpfungselement 10 enthält, im Detail vergrößert dargestellt. Der Federtopf sowie das Dämpfungselement sind im Halbschnitt gezeigt. Die auf der Membran 7 lastende Bodenfläche 9a des Federtopfes 9 ist in der Mitte etwas verdickt, sodaß ein Lager für die Druckfeder 8 gebildet wird. Wie in Figur 2 zu erkennen ist, besteht das Dämpfungselement aus einer Ringscheibe 12, die zwischen dem Einspannflansch 22 und dem randseitigen Bereich der Membran 7 eingespannt ist. An die Ringscheibe 12 schließen sich Federzungen 11 an, die unter elastischer Verbiegung gegen die Mantelfläche des Federtopfes 9 anliegen. Der Einspannflansch 22 ist so angeordnet und dimensioniert, daß zwischen ihm und dem Federtopf 9 ausreichend Freiraum zur Aufname der Federzungen 11 besteht.

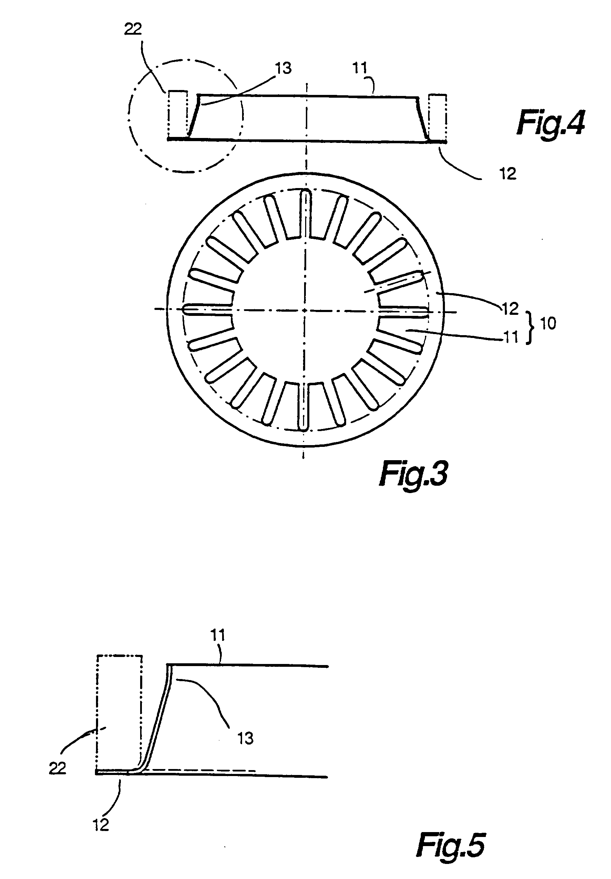

Figur 3 zeigt das Dämfpungselement im Detail in der Draufsicht. Wie in der Figur zu erkennen ist, weist das Dämpfungselement eine umlaufende Ringscheibe 12 auf, an die sich die Federzungen 11 anschließen, die radial nach innen weisen. Bei dem gewählten Ausführungsbeispieles sind insgesamt zwanzig Federzungen vorgesehen.

Figur 4 zeigt das Dämpfungselement 10 in der Seitenansicht. Auch hier ist wiederum die Ringscheibe 12 zu erkennen, die durch den - gestrichelt angedeuteten - Einspannflansch 22 festgepreßt wird. Die Federzungen 11 stehen im unbelasteten Zustand unter einem Winkel von 75° nach oben. Wenn das Dämpfungselement um den in Figur 2 gezeigten Federtopf angeordnet wird, werden die Federzungen 11 unter elastischer Verformung weiter aufgebogen, bis sich zwischen der Ringscheibe 12 und den Federzungen ein Winkel von nahezu 90° einstellt.

Figur 5 zeigt einen vergrößerten Detailausschnitt aus Figur 4. Der Ausschnittsbereich ist in Figur 4 durch einen strichpunktiert eingezeichneten Kreis angedeutet. Wie insbesondere in Figur 5 zu erkennen ist, weisen die Federzungen 11 zu ihrer Spitze eine Biegung 13 auf, sodaß ihre Spitze etwas in Richtung auf den Einspannflansch 22 weist. Das bedeutet, daß bei eingesetztem Federtopf 9 sich die jeweilige Zungenspitze von der Wandung des Federtopfes abhebt und somit die Kanten der Zungenspitze keine Riefen in dem Federtopf verursachen können. Die Biegung 13 weist jedoch einen sehr großen Radius auf, sodaß jede Federzunge möglichst großflächig an dem Federtopf 9 anliegt.

## Patentansprüche

1. Druckminderer mit einem einen Hochdruckeinlaß (1) und einen Niederdruckauslaß (2) aufweisenden Gehäusegrundkörper (3), in dem ein Ventil (4) angeordnet ist, das den Innenraum des Gehäusegrundkörpers in einen Niederdruckraum (5) und einen Hochdruckraum (6) unterteilt, mit einer in dem Niederdruckraum (5) angeordneten, mit dem Ventil in Verbindung stehenden Membran (7), die von einer Seite mit einer Druckfeder (8) belastet ist, und mit einem die Bewegung des Ventils (4) dämpfenden Dämpfungselement (10), **dadurch gekennzeichnet,** daß das zur Membran (7) weisende Ende der Druckfeder (8) von einem axial beweglichen Federtopf (9) umgeben ist, der sich mit seiner äußeren Bodenfläche (9a) an der Membran (7) abstützt, und daß das Dämpfungselement (10) Metallzungen (11) aufweist, die unter elastischer Vorspannung an der Mantelfläche des Federtopfes (9) anliegen.

2. Druckminderer nach Anspruch 1, dadurch gekennzeichnet, daß das Dämpfungselement (10) eine zur Bodenfläche (9a) des Topfes (9) etwa parallel liegende, die Mantelfläche des Federtopfes (9) umgebende Ringscheibe (12) aufweist, die eine Vielzahl von nach innen weisenden Federzungen (11) trägt, die an der Mantelfläche des Federtopfes (9) anliegen und dadurch elastisch in eine Richtung etwa senkrecht zur Fläche der Ringscheibe (12) aufgebogen sind.

3. Druckminderer nach Anspruch 2, dadurch gekennzeichnet, daß das Dämpfungselement (10) in einer solchen Form vorgefertigt ist, daß die Federzungen (11) im unbelasteteten Zustand zur Ringscheibe (12) einen Winkel von 60° bis 85°, vorzugsweise 75° einnehmen.

4. Druckminderer nach einem der Ansprüche 1 bis 3, dadurch gekennzeichnet, daß die Federzungen (11) zu ihrem freien Ende hin eine Biegung (13) derart aufweisen, daß das freie Ende sich von der Mantelfläche des Federtopfes (9) etwas abhebt.

5. Druckminderer nach einem der Ansprüche 1 bis 4, dadurch gekennzeichnet, daß das Dämpfungselement (10) aus einer Kupfer- Beryllium-Legierung besteht.

6. Druckminderer nach einem der Ansprüche 1 bis 5, dadurch gekennzeichnet, daß das Dämpfungselement (10) aus einem 0,1 bis 0,2 mm, vorzugsweise 0,15 mm dicken Blech ausgestanzt ist.

7. Druckminderer nach einem der Ansprüche 1 bis 6, dadurch gekennzeichnet, daß der Federtopf (9) aus Aluminium besteht.

## Claims

1. Pressure reducer with a housing body (3) which has a high pressure inlet (1) and a low pressure outlet (2) and in which is arranged a valve (4) which divides the interior of the housing body into a low pressure space (5) and a high pressure space (6), with a membrane (7), which is arranged in the low pressure space (5) and is connected to the valve and which is acted upon from one side by a compression spring (8), and with a damping element (10) damping the movement of the valve (4), characterised in that the end of the compression spring (8) directed towards the membrane (7) is surrounded by an axially movable spring cup (9), the outer base surface (9a) of which bears against the membrane (7), and that the damping element (10) has metal tongues (11) which engage the side surface of the spring cup (9) under an elastic biasing force.

2. Pressure reducer as claimed in claim 1, characterised in that the damping element (10) has an annular disc (12) which is disposed approximately parallel to the base surface (9a) of the cup (9) and surrounds the side surface of the spring cup (9) and which carries a plurality of inwardly pointing spring tongues (11) which engage the side surface of the spring cup (9) and are thus elastically bent up into a direction approximately perpendicular to the surface of the annular disc (12).

3. Pressure reducer as claimed in claim 2, characterised in that the damping element (10) is prefabricated in such a shape that the spring tongues (11) adopt an angle, in the unloaded state, to the annular disc (12) of 60° to 85°, preferably 75°.

4. Pressure reducer as claimed in one of claims 1 to 3, characterised in that the spring tongues (11) have a bend (13) towards their free end so that the free end lifts up somewhat from the side surface of the spring cup (9).

5. Pressure reducer as claimed in one of claims 1 to 4, characterised in that the damping element (10) comprises a copper-beryllium alloy.

6. Pressure reducer as claimed in one of claims 1 to 5, characterised in that the damping element (10) is stamped out of metal plate 0.1 to 0.2mm, preferably 0.15mm, thick.

7. Pressure reducer as claimed in one of claims 1 to 6, characterised in that the spring cup (9) comprises aluminium.

## Revendications

1. Vanne de détente munie d'un corps de base de boîtier (3) présentant une entrée de haute pression (1) et une entrée de basse pression (2), dans lequel est disposée une soupape (4) qui subdivise l'espace intérieur du corps de base du boîtier en un espace basse pression (5) et un espace haute pression (6), d'une membrane (7) disposée dans l'espace basse pression (5) et en liaison avec la soupape, qui est chargée d'un côté avec un ressort à pression (8), et d'un élément amortisseur (10) amortissant le mouvement de la soupape (4), caractérisée en ce que l'extrémité tournée vers la membrane (7) du ressort à pression (8) est entourée par une cuvette de ressort hélicoïdal (9) mobile axialement qui s'appuie avec sa surface de fond (9a) extérieure sur la membrane (7), et en ce que l'élément amortisseur (10) présente des lames métalliques (11) qui s'appliquent sous prétension élastique contre l'enveloppe de cuvette du ressort hélicoïdal (9).

2. Vanne de détente selon la revendication 1, caractérisée en ce que l'élément amortisseur (10) présente une rondelle annulaire (12) à peu près parallèle à la surface inférieure (9a) de la cuvette de ressort (9) et entourant l'enveloppe de la cuvette de ressort hélicoïdal (9), qui porte une pluralité de languettes de ressort (11) dirigées vers l'intérieur qui s'appliquent contre l'enveloppe du réceptacle de ressort hélicoïdal (9) et sont de ce fait recourbées de façon élastique dans une direction à peu près perpendiculaire à la surface de la rondelle annulaire (12).

3. Vanne de détente selon la revendication 2, caractérisée en ce que l'élément amortisseur (10) est préfabriqué dans une forme telle que les languettes de ressort (11) font un angle de 60° à 85°, de préférence 75°, par rapport à la rondelle annulaire (12) à l'état non chargé.

4. Vanne de détente selon l'une quelconque des revendications 1 à 3, caractérisée en ce que les lames de ressort (11) présentent en direction de leur extrémité libre une courbure (13) de telle façon que l'extrémité libre dépasse légèrement de l'enveloppe de la cuvette de ressort hélicoïdal (9).

5. Vanne de détente selon l'une quelconque des revendications 1 à 4, caractérisée en ce que l'élément amortisseur (10) est en un alliage de cuivre-béryllium.

6. Vanne de détente selon l'une quelconque des revendications 1 à 5, caractérisée en ce que l'élément amortisseur (10) est découpé dans une tôle épaisse de 0,1 à 0,2 mm, de préférence 0,15 mm.

7. Vanne de détente selon l'une quelconque des revendications 1 à 6, caractérisée en ce que la cuvette du ressort hélicoïdal (9) est en aluminium.
